# EUROPÄISCHE PATENTSCHRIFT

(11) **EP 0 761 323 B1**
(45) Veröffentlichungstag und Bekanntmachung des Hinweises auf die Patenterteilung: **26.05.1999**
(21) Anmeldenummer: 95114042.5
(22) Anmeldetag: 07.09.1995
(51) Int. Cl.: B09C 1/02, B09C 1/00

(54) **Verfahren zum Dekontaminieren von mit Schadstoffen belasteten Böden und Bohrkopf zur Durchführung des Verfahrens**
Method of decontaminating polluted soils and drill head for carrying out the method
Procédé pour la décontamination de sols pollués et tête de forage pour mettre en oeuvre le procédé

(43) Veröffentlichungstag der Anmeldung: 12.03.1997
(73) Patentinhaber: FlowTex Technologie GmbH & Co. KG, 76275 Ettlingen (DE)
(72) Erfinder: Bayer, Hans-Joachim, Dr., D-76275 Ettlingen (DE)
(74) Vertreter: Füchsle, Klaus, Dipl.-Ing.

(56) Entgegenhaltungen:
- DE-A- 3 516 572
- DE-U- 8 804 344
- US-A- 4 848 460
- US-A- 4 993 503
- US-A- 5 186 256
- US-A- 5 265 674

## Beschreibung

Die Erfindung betrifft ein Verfahren zum Dekontaminieren von mit Schadstoffen belasteten Böden, bei dem eine Anzahl von Bohrungen mittels eines verlaufsgesteuerten Bohrverfahrens bis zu den Randbereichen des kontaminierten Bodenvolumens eingebracht werden, sowie einen Bohrkopf zur Durchführung des Verfahrens mit einem Innenkanal, einer gegenüber der Längsachse des Bohrkopfes, zur Bohrkopfspitze hin geneigten Steuerfläche und einer Anzahl von Öffnungen, die mit dem Innenkanal in Verbindung stehen und in einer an die Steuerfläche anschließenden Fläche eingeformt sind.

Vielerorts sind Böden mit den verschiedensten Schadstoffen, wie zum Beispiel halogenen und aromatischen Kohlenwasserstoffen sowie z.B. Säuren, Cyaniden und auch Schwermetallen stark belastet. Um diese Böden zu dekontaminieren, bestand bisher nur die Möglichkeit, den gesamten Boden auszubaggern und einer externen Bodenwäsche zu unterziehen. Eine externe Bodenwäsche ist jedoch je nach auszubaggerndem Volumen sehr teuer und langwierig. Des weiteren können durch Ausbaggern schwer zugängliche Bodenbereiche gar nicht gereinigt werden.

Das US-Patent 4,848,460 beschreibt ein Verfahren zur Gewinnung von öligen Abfällen wie Teere und Pentachlorophenollösungen. Hierzu wird in einem regelmäßigen Muster eine vertikale Bohrung in das Erdreich ausgeführt und durch diese Bohrungen heißes Wasser in das Erdreich eingepumpt. Durch weitere, vertikal ausgeführte Bohrungen wird das Wasser abgesaugt und werden in einem nachgeschalteten Arbeitsschritt die organischen Komponenten von dem Wasser abgetrennt. Die US 4,848,460 bildet den Oberbegriff von Patentanspruch 1.

Die US 4,996,503 beschreibt einen Bohrkopf für eine verlaufsgesteuerte Horizontalbohrtechnik mit einer gegenüber der Längsachse des Bohrkopfes zur Bohrkopfspitze hin geneigten Steuerfläche und Austrittsöffnungen für Schneidstrahlen an Flächen, die sich an die Steuerfläche anschließen. Die Flächen mit den darin eingeformten Öffnungen sind eben ausgebildet und stehen in einem Winkel zueinander, so daß beim Vortrieb des Bohrkopfes das Erdreich leichter seitlich am Bohrkopf vorbei abgelenkt wird, ohne diese Flächen zu beschädigen und ohne daß Erdreich in die Düsenöffnungen eindringen kann. Der Gegenstand des US 4,993,503 bildet den Oberbegriff von Anspruch 10.

Das der Erfindung zugrundeliegende technische Problem besteht darin, ein effektives Verfahren zur Dekontaminierung von Böden zu schaffen, das mit einem relativ geringen Aufwand wirksam den Schadstoffgehalt im Boden reduziert.

Dieses technische Problem wird durch ein Verfahren mit den Merkmalen des Anspruchs 1 gelöst. Des weiteren wird zur Durchführung des Verfahrens ein Bohrkopf mit den Merkmalen des Anspruchs 10 bereitgestellt.

Der Erfindung liegt der Gedanke zugrunde, daß durch das gezielte Vorantreiben von Bohrungen mittels eines voll steuerbaren Bohrverfahrens Bohrungen zum kontaminierten Bodenvolumen von mindestens einer Seite aus - bevorzugtermaßen von allen Seiten - voran- und weitergetrieben werden und durch gerichtetes Injizieren eines geeigneten Injektionsmittels mit dem erfindungsgemäßen Bohrkopf, die Schadstoffe aus den feinsten Poren- und Porenzwickelräumen des kontaminierten Bodenvolumens herausgelöst werden und sich in einem gegenüber dem ursprünglich kontaminierten, kleineren Bodenvolumen anreichern. Im nun kleineren, hochkontaminierten Bodenvolumen werden die Schadstoffe dann entnommen.

Durch das erfindungsgemäße Weitertreiben der Bohrungen und dem gerichteten Injizieren von geeigneten Injektions- und Bodenverbesserungsmitteln werden vorteilhafterweise die schwach bis mittelschwach kontaminierten Bodenbereiche direkt einer in-situ-Bodenwäsche unterworfen und brauchen nicht weiter behandelt werden.

Erstmals ist somit ohne große Erdarbeiten ein Dekontaminieren von Bodenschichten unter gleichzeitiger Anreicherung von Schadstoffen in einem kleinen, vorbestimmten Bodenvolumen möglich. Zwar sind eine bestimmte Anzahl von Bohrungen notwendig, um sicherzustellen, daß die Schadstoffe bis zu dem gewünschten Bodenvolumen hinwandern, jedoch sind die Bohrungskosten und die gleichzeitig erfolgende Injizierung von Injektionsmitteln um vieles billiger als beim bekannten Stand der Technik.

Zudem können erstmals bei dem erfindungsgemäßen Verfahren auch bisher nicht erreichbare Bodenschichten dekontaminiert werden, da mit dem vollkommen verlaufsgesteuerten Bohrverfahren auch unterhalb einer Bebauung die Schadstoffe zu Bereichen getrieben werden können, die dann in herkömmlicher Weise entsorgbar sind.

Es ist vorteilhaft, die zusammengetriebenen Schadstoffe in dem kleineren, hochkontaminierten Bodenvolumen durch eine Entnahmevorrichtung zu entnehmen. Denn hierdurch wird die Ausführung von Erdarbeiten weitgehend vermieden. Insbesondere ist - aufgrund der einfachen Konstruktion - als Entnahmevorrichtung zumindest ein geeignetes Rohr oder dergleichen mit zumindest einer daran angeschlossener Saugpumpe vorteilhaft.

Ein sehr kostengünstig und auf einfache Art und Weise durchzuführendes Entnehmen der zusammengetriebenen Schadstoffe besteht darin, das kleine, hochkontaminierte Bodenvolumen auszubaggern und extern zu entsorgen bzw. zu reinigen oder auch als Sondermüll zu entsorgen. Da die Kosten für eine externe Bodenwäsche und das Ausbaggern sehr hoch sind und auch die Deponierung als Sondermüll pro Kubikmeter immense Kosten verursacht, ist erstmals durch das erfindungsgemäße Verfahren eine starke Kostenverringerung möglich.

Aufgrund der geringen Kosten hat sich als Injektionsmittel Wasser oder Heißdampf, die mit hohem Druck in den Boden injiziert werden, als sehr vorteilhaft erwiesen.

Um die Oberflächenspannung der Injektionsmittel herabzusetzen und hierdurch ein leichteres Lösen der Schadstoffe aus den Poren bzw. Porenzwickelräumen der kontaminierten Bodenschichten zu erreichen, ist das Beigeben von Tensiden bzw. Biotensiden in das Injektionsmittel problemlos möglich.

Weiterhin können gleichzeitig oder nach dem Injizieren des Injektionsmittels Füllstoffe in den Porenraum des Untergrundes hinein injiziert werden, die ein Wiedereindringen erneuter oder anderer Schadstoffe verhindern und zugleich stofflich die Boden- und Untergrundbedingungen verbessern.

Je nach Bodenbeschaffenheit und der Art der Schadstoffe im kontaminierten Bodenbereich hat sich die Injizierung von Injektionsmittel mit einem Druck von 10 bis 600 bar bewährt.

Zur Unterstützung der gewünschten Migration, d.h. der Wanderung der Schadstoffe in eine bestimmte Richtung ist es vorteilhaft, ein oder mehrere Heizkabel in zumindest eine Bohrung einzuziehen. Hierdurch wird die Wärmeentwicklung als Unterstützung zur Migration der Schadstoffe benutzt.

Die Ausbildung des Heizkabels als Heizspule oder Kohlenschnur oder auch der Art, daß eine Aussendung von Mikrowellen ermöglicht wird, bewirkt vorteilhafterweise eine kostengünstige, zusätzliche Einwirkung zur Migration der Schadstoffe in die gewünschte Richtung.

Durch die Verwendung eines erfindungsgemäßen Bohrkopfs zur Durchführung des Verfahrens mit einem Innenkanal, einer gegenüber der Längsachse des Bohrkopfes, zur Bohrkopfspitze hin geneigten Steuerfläche und einer Anzahl von Öffnungen, die mit dem Innenkanal in Verbindung stehen und in einer an die Steuerfläche anschließenden Fläche eingeformt sind, wobei die Fläche mit den darin eingeformten Öffnungen konvex ausgebildet ist, wird eine sehr effektive und genaue Steuerung der Richtung der Migration der Schadstoffe bewirkt.

Durch die regelmäßige Verteilung der Öffnungen auf der konvexen Fläche ist ein vorbestimmter Bodenbereich bei der Injizierung der Injektionsmittel sehr präzise beaufschlagbar, wodurch die Schadstoffe aus den Poren- und Porenzwickelräumen sehr effektiv herausgelöst werden.

Vorteilhafterweise haben die Öffnungen einen Durchmesser von 0,1 mm bis 2,5 mm, je nach Bodenbeschaffenheit.

Indem die Öffnungen mit dem Innenkanal durch eine Erweiterungskammer verbunden sind, werden auf sehr einfache konstruktive Weise alle Öffnungen gleichzeitig mit dem Injektionsmittel versorgt.

Dadurch, daß sich der Bohrkopf zur konvexen Fläche hin, d.h. zur Bohrkopfspitze hin aufweitet, bzw. im Durchmesser vergrößert, vergrößert sich auch die konvexe Fläche mit den eingeformten Öffnungen. Hierdurch wird die Anordnung einer größeren Anzahl von Öffnungen auf der konvexen Fläche ermöglicht, was wiederum zu einer feineren und besseren Injizierung des Injektionsmittels führt. Gleichzeitig wird auch die Steuerfläche im Endbereich verbreitert, wodurch auch die Steuerbarkeit des Bohrkopfs vorteilhafterweise weiter verbessert wird.

Indem die Öffnungen senkrecht zu den jeweils zugehörigen Tangentialebenen an die konvexe Fläche ausgerichtet sind, ist die sich aufweitende Ausbildung des Injektionsstrahls gegeben.

Vorteilhafterweise tritt das Injektionsmittel durch die Öffnungen hindurch fächerförmig aus, wobei der so entstehende, sich aufweitende Austrittsstrom einen Winkelbereich von 30° bis 120° einschließt, wodurch der mit Injektionsmittel in Kontakt tretende Bodenbereich bis zu 3 bis 5 m im Durchmesser beaufschlagt wird.

Im folgenden ist zur weiteren Erläuterung und zum besseren Verständnis der Erfindung ein Ausführungsbeispiel unter Bezugnahme auf die beigefügten Zeichnungen näher beschrieben und erläutert. Es zeigt:
- Fig. 1: einen Längsschnitt durch einen erfindungsgemäßen Bohrkopf mit einer Vielzahl von Öffnungen an der Bohrkopfspitze;
- Fig. 2: eine perspektivische Ansicht des erfindungsgemäßen Bohrkopfs mit verbreiterter Steuerfläche und schematisch dargestelltem Austritt von Injektionsmittel;
- Fig. 3: eine schematische Profildarstellung einer Anzahl von Bohrungen mit teilweise stark vereinfachter Darstellung von Bohrköpfen, wobei die Bohrungen zusammenlaufend auf ein kleines, vorbestimmtes Bodenvolumen hinsteuern; und
- Fig. 4: einen Aufriß zu Fig. 3.

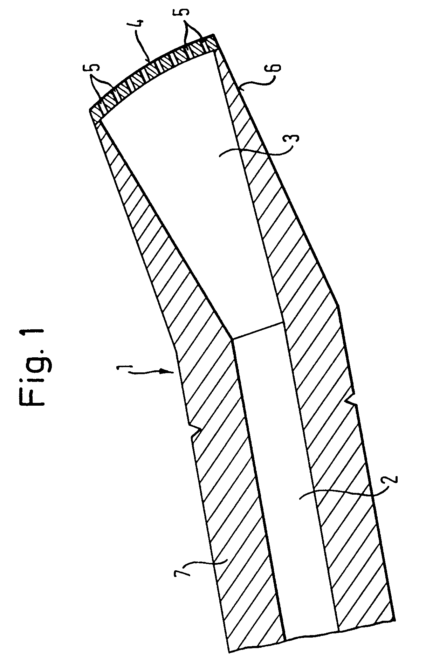

In der Fig. 1 ist ein Längsschnitt durch einen erfindungsgemäßen Bohrkopf 1 gezeigt, der an dem Bohrkopfende einen im wesentlichen zylinderförmigen Bohrkopfschaft 7 aufweist. Eine ebene Steuerfläche 6 neigt sich gegenüber der Längsachse des Bohrkopfs 1 zur Bohrkopfspitze hin. Daran schließt eine leicht konvexe Fläche 4 an, in der eine Anzahl Öffnungen 5 eingeformt sind. Im Inneren des Bohrkopfs 1 verläuft koaxial mit der Längsachse des Bohrkopfs ein Innenkanal 2, der durch das Bohrgestänge hindurch mit Bohrsuspension und auch Injektionsmittel versorgt wird. Eine Erweiterungskammer 3 schließt sich an den im wesentlichen einen gleichen Querschnitt aufweisenden Innenkanal 2 an. Die Erweiterungskammer 3 reicht bis zur konvexen Fläche 4, so daß alle Öffnungen 5 gemeinsam über die Erweiterungskammer 3 mit dem Innenkanal 2 verbunden sind. Bei diesem Längsschnitt wird deutlich, daß sich zur Bohrkopfspitze hin der Bohrkopf 1 erweitert, um eine möglichst große Anzahl von Öffnungen 5 in der konvexen Fläche 4 anordnen zu können. Dadurch wird beim Ausströmen des Injektionsmittels ein feiner, sich über einen großen Winkelbereich erstreckender, sich aufweitender Strahl erzeugt.

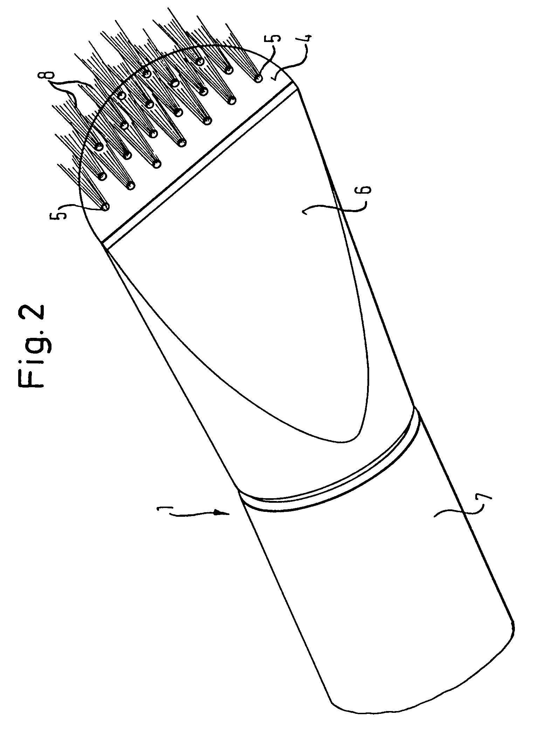

In der Fig. 2 ist eine perspektivische Ansicht des erfindungsgemäßen Bohrkopfs 1 gezeigt. Insbesondere wird in dieser Ansicht nochmals deutlich, daß sich der Bohrkopf 1 zur Bohrkopfspitze hin leicht aufweitet, um die bereits genannten Vorteile zu erzielen. Dabei wird gleichzeitig auch die Steuerfläche 6 gegenüber einem gleichmäßig zylindrisch ausgebildeten Bohrkopf verbreitert, wodurch der Bohrkopf verbesserte Steuereigenschaften aufweist. In der Fig. 2 ist auch das Ausströmen von Injektionsmittel durch die Öffnungen 5 in der konvexen Fläche 4 dargestellt. Der sich auffächernde, feinverteilte Injektionsstrahl 8 ist hier schematisch gezeigt.

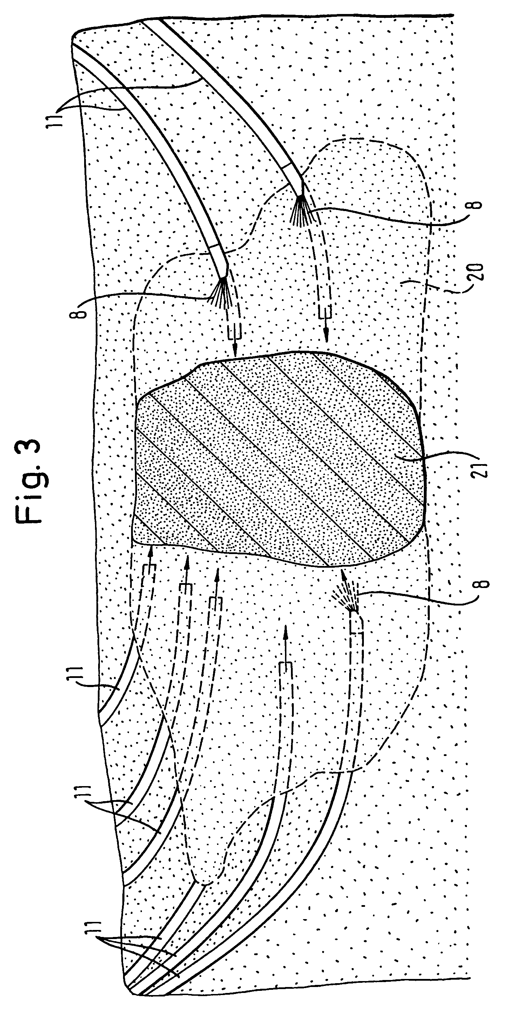

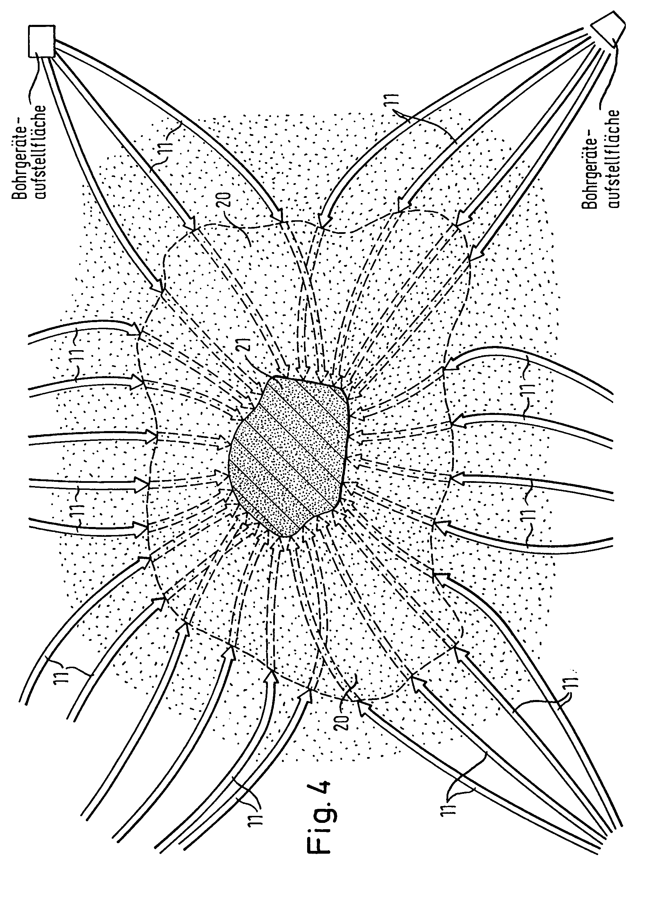

Eine sehr schematische Darstellung des erfindungsgemäßen Verfahrens ist in den Fig. 3 und 4 gezeigt. Anhand dieser Darstellung wird im folgenden das erfindungsgemäße Verfahren beschrieben.

Aufgrund von historischen, geologischen und geophysikalischen Untersuchungen und dergleichen wird festgestellt, daß ein großes Bodenvolumen 20 mit Schadstoffen belastet ist. Dieses Bodenvolumen ist in den Fig. 3 und 4 durch die Strichlinle gekennzeichnet. Es werden nun von der Oberfläche aus vollkommen verlaufsgesteuerte Bohrungen 11 im Abstand von etwa 0,8 m bis 4 m bis zu den Randbereichen des kontaminierten Bodenvolumens 20 vorangetrieben. Zuvor wird festgelegt, in welche Richtung die Schadstoffe getrieben werden sollen. Dies geschieht vorteilhafterweise in Richtung des am meist belasteten Bodenvolumens 21. Das heißt, daß die Schadstoffe aus den schwächer belasteten Schichten 2 in Richtung des höher belasteten Volumens 21 getrieben bzw. gespült werden.

Es wird nun ein Bohrungsplan festgelegt, der die besonderen geologischen und auch geographischen Gegebenheiten berücksichtigt. Dann werden vollkommen verlaufsgesteuerte Bohrungen 11 bis zu den Randbereichen des schwächer kontaminierten Bodenvolumens 20 vorangetrieben. Nachdem durch den erfindungsgemäßen Bohrkopf Injektionsmittel 8 in den Boden injiziiert wird, werden die Schadstoffe aus den feinsten Poren- bzw. Porenzwickelräumen des Bodens 20 herausgespült und in eine bestimmte Richtung mit dem Injektionsmittel 8 gedrückt. Diese Richtung kann genauestens vorbestimmt werden, indem während des Bohrens weiterhin Injektionsmittel injiziert wird. Durch die dargestellte Anzahl von Bohrungen 11 erfolgt also eine Ausspülung der Schadstoffe, die dann in eine bestimmte Richtung migrieren.

Durch das erfindungsgemäße Verfahren werden große Teile des zuvor kontaminierten Bodenvolumens 20 einer in-situ-Bodenwäsche unterzogen und bedürfen keiner weiteren Behandlung. Durch das Erzeugen einer Migration der ausgelösten Schadstoffe in bestimmte Richtungen wird ein zuvor bestimmtes Bodenvolumen 21 mit den ausgelösten Schadstoffen angereichert. Dieses stark verkleinerte, nun hochkontaminierte Bodenvolumen 21 wird nun in bekannter Weise ausgebaggert und entweder einer externen Bodenwäsche unterzogen oder als Sondermüll deponiert. Dadurch, daß das ursprünglich verseuchte Bodenvolumen 20 durch das erfindungsgemäße Verfahren auf das stark verkleinerte Bodenvolumen 21 verringert wurde, ist auch trotz der großen Anzahl von Bohrungen 11 eine große Kostenersparnis möglich.

## Patentansprüche

1. Verfahren zum Dekontaminieren von mit Schadstoffen belasteten Böden, bei dem eine Anzahl von Bohrungen (11) eingebracht werden, dann zumindest ein geeignetes Injektionsmittel (8) von den Bohrungen (11) aus derart injiziert wird, daß die Schadstoffe in ein kleineres Bodenvolumen (21) getrieben werden;
dadurch **gekennzeichnet**, daß
- die Bohrungen zunächst mittels eines verlaufsgesteuerten Bohrverfahrens bis zu den Randbereichen des kontaminierten Bodenvolumens (21) eingebracht werden; und dann
- das Injizieren unter Vorantreiben der Bohrungen (11) in das kontaminierte Bodenvolumen hinein richtungskontrolliert erfolgt.

2. Verfahren nach Anspruch 1, dadurch gekennzeichnet, daß die Schadstoffe durch eine Entnahmevorrichtung, in den kleineren hochkontaminierten Bodenvolumen (21) entnommen werden.

3. Verfahren nach Anspruch 2, dadurch gekennzeichnet, daß die Entnahmevorrichtung aus zumindest einem geeigneten Rohr oder dergleichen mit zumindest einer daran angeschlossener Saugpumpe besteht.

4. Verfahren nach Anspruch 1, dadurch gekennzeichnet, daß das kleine, hochkontaminierte Bodenvolumen (21) ausgebaggert und extern entsorgt bzw. gereinigt wird.

5. Verfahren nach Anspruch 1, dadurch gekennzeichnet, daß als Injektionsmittel (8) Wasser oder Heißdampf mit hohem Druck in den Boden (20) injiziert wird.

6. Verfahren nach Anspruch 1 oder 5, dadurch gekennzeichnet, daß Tenside bzw. Biotenside und/oder Füllstoffe dem Injektionsmittel (18) zugegeben werden.

7. Verfahren nach einem der vorhergehenden Ansprüche, dadurch gekennzeichnet, daß das Injektionsmittel (8) mit einem Druck von 10 bis 600 bar in den Boden (20) injiziert wird.

8. Verfahren nach Anspruch 1, dadurch gekennzeichnet, daß ein Heizkabel in zumindest eine Bohrung eingezogen wird.

9. Verfahren nach Anspruch 8, dadurch gekennzeichnet, daß das Heizkabel als Heizspule oder Kohlenschnur ausgebildet ist oder auch die Aussendung von Mikrowellen ermöglicht.

10. Bohrkopf zur Durchführung des Verfahrens nach Anspruch 1 mit
- einem Innenkanal (2),
- einer gegenüber der Längsachse des Bohrkopfes (1), zur Bohrkopfspitze hin geneigten Steuerfläche (6) und
- Öffnungen (5), die mit dem Innenkanal (2) in Verbindung stehen und in einer an die Steuerfläche (6) anschließenden Fläche (4) eingeformt sind,
dadurch **gekennzeichnet,** daß
- die Fläche (4) konvex ausgebildet ist, und
- sich in der Fläche (4) eine Vielzahl von Öffnungen (5) befindet, wobei
- die Öffnungen (5) so angeordnet sind, daß ein feinverteilter, sich aufweitender Injektionsstrahl (8) erzeugbar ist.

11. Bohrkopf nach Anspruch 10, dadurch gekennzeichnet, daß die Öffnungen (5) auf der konvexen Fläche (4) regelmäßig verteilt sind.

12. Bohrkopf nach Anspruch 10 oder 11, dadurch gekennzeichnet, daß die Öffnungen (5) einen Durchmesser von 0,1 mm bis 2,5 mm aufweisen.

13. Bohrkopf nach einem oder mehreren der Ansprüche 10, 11 oder 12, dadurch gekennzeichnet, daß sich an den Innenkanal (2) eine Erweiterungskammer (3) anschließt, die alle Öffnungen (5) mit dem Innenkanal (2) verbindet.

14. Bohrkopf nach Anspruch 10, dadurch gekennzeichnet, daß der Bohrkopf (1) sich zur konvexen Fläche (4) hin aufweitet.

15. Bohrkopf nach einem oder mehreren der Ansprüche 10 bis 14, dadurch gekennzeichnet, daß die Öffnungen (5) senkrecht zu den jeweils zugehörigen Tangentialebenen an die konvexe Fläche (4) ausgerichtet sind.

16. Bohrkopf nach einem oder mehreren der Ansprüche 10 bis 15, dadurch gekennzeichnet, daß das Injektionsmittel (8) durch die Öffnungen (5) hindurch fächerförmig austritt, wobei der so entstehende sich aufweitende Austrittsstrom einen Winkelbereich von 30° bis 120° einschließt

## Claims

1. Method for the decontamination of soils polluted with noxious substances in which a number of boreholes (11) are introduced, then at least one suitable injection medium (8) is injected out of the boreholes (11) in such a way that the noxious substances are driven into a smaller volume of soil (21),
characterised in that
- the boreholes are first of all introduced up to the margins of the contaminated volume of soil (21) by means of a progress-controlled drilling method, and then
- the injection under directional control into the contaminated volume of soil ensues while the boreholes (11) are driven further in.

2. Method according to Claim 1, characterised in that the noxious substances are withdrawn in the smaller highly contaminated volume of soil (21) by means of a take-off device.

3. Method according to Claim 2, characterised in that the take-off device is composed of at least one suitable pipe or the like having at least one suction pump connected thereto.

4. Method according to Claim 1, characterised in that the small, highly contaminated volume of soil (21) is dug out and disposed of or cleaned externally.

5. Method according to Claim 1, characterised in that water or superheated steam at high pressure as injection medium (8) is injected into the soil (20).

6. Method according to Claim 1 or 5, characterised in that surfactants or biological surfactants and/or fillers are added to the injection medium (18).

7. Method according to one of the preceding claims, characterised in that the injection medium (8) is injected into the soil (20) at a pressure of 10 to 600 bar.

8. Method according to Claim 1, characterised in that a heating cable is drawn into at least one borehole.

9. Method according to Claim 8, characterised in that the heating cable is constructed as a heating coil or a carbon cord or also allows the emission of microwaves.

10. Drilling head for carrying out the method according to Claim 1 having
- an inner channel (2),
- a control surface (6) inclined with respect to the longitudinal axis of the drilling head (1) towards the tip of the drilling head and
- openings (5) which are connected to the inner channel (2) and are formed in a surface (4) adjoining the control surface (6),
characterised in that
- the surface (4) is of convex construction and
- a multiplicity of openings (5) are located in the surface (4), wherein
- the openings (5) are arranged in such a way that a finely distributed, expanding injection jet (8) can be produced.

11. Drilling head according to Claim 10, characterised in that the openings (5) are distributed regularly on the convex surface (4).

12. Drilling head according to Claim 10 or 11, characterised in that the openings (5) have a diameter of 0.1 mm to 2.5 mm.

13. Drilling head according to one or more of Claims 10, 11 or 12, characterised in that adjoining the inner channel (2) is an expansion chamber (3) which connects all the openings (5) to the inner channel (2).

14. Drilling head according to Claim 10, characterised in that the drilling head (1) widens towards the convex surface (4).

15. Drilling head according to one or more of Claims 10 to 14, characterised in that the openings (5) are each oriented at right angles to the associated tangential planes to the convex surface (4).

16. Drilling head according to one or more of Claims 10 to 15, characterised in that the injection medium (8) emerges through the openings (5) in the form of a fan, the expanding discharged stream produced in this way enclosing an angular range of 30° to 120°.

## Revendications

1. Procédé pour la décontamination de sols pollués, dans lequel une pluralité de forages (11) sont creusés, ensuite au moins un produit d'injection (8) étant injecté depuis les forages (11), de manière que les produits nocifs soient refoulés en un plus petit volume de sol (21);
caractérisé en ce que
- les forages sont d'abord creusés par un procédé de forage à commande du tracé, jusqu'aux zones de bordure du volume de sol (21) contaminé; et ensuite
- l'injection s'effectue avec un contrôle directionnel en étant accompagné de la progression des forages (11) dans le volume de sol contaminé

2. Procédé selon la revendication 1, caractérisé en ce que les produits nocifs sont prélevés dans le volume de sol (21) fortement contaminé et de plus petite dimension, au moyen d'un dispostif de prélèvement.

3. Procédé selon la revendication 2, caractérisé en ce qu'un dispositif de prélèvement est constitué d'au moins un tube approprié ou analogue, avec au moins une pompe d'aspiration y étant raccordée.

4. Procédé selon la revendication 1, caractérisé en ce que le volume de sol (21) fortement contaminé, de petite dimension, est excavé et est éliminé ou épuré en externe.

5. Procédé selon la revendication 1, caractérisé en ce que l'on injecte dans le sol (20) comme produit d'injection (8) de l'eau de la vapeur d'eau sous haute pression.

6. Procédé selon la revendication 1 ou 5, caractérisé en ce que des agents tensioactifs ou des agents biotensioactifs et/ou des charges sont ajoutés au produit d'injection (18).

7. Procédé selon l'une des revendications précédentes, caractérisé en ce que le produit d'injection (8) est injecté dans le sol (20) sous une pression de 10 à 600 bar.

8. Procédé selon la revendication 1, caractérisé en ce qu'un câble de chauffage est introduit dans au moins un forage.

9. Procédé selon la revendication 8, caractérisé en ce que le câble de chauffage est réalisé sous la forme d'une bobine de chauffage ou d'un cordon en charbon ou bien permet également l'émission de micro-ondes.

10. Tête de forage pour mettre en oeuvre le procédé selon la revendication 1, comportant
- un canal intérieur (2),
- une surface de commande (6) inclinée par rapport à l'axe longitudinal de la tête de forage (1), en direction de la pointe de tête de forage et
- des ouvertures (5) qui sont reliées au canal intérieur (2) et sont creusées dans une surface (4) se raccordant à la surface de commande (6),
caractérisée en ce que
- la surface (4) est convexe, et
- dans la surface (4) se trouvent une pluralité d'ouvertures (5),
- les ouvertures (5) étant disposées de manière à pouvoir générer un jet d'injection (8) finement divisé, allant en s'élargissant.

11. Tête de forage selon la revendication 10, caractérisée en ce que les ouvertures (5) sont réparties régulièrement sur la surface convexe (4).

12. Tête de forage selon la revendication 10 ou 11, caractérisée en ce que les ouvertures (5) ont un diamètre allant de 0,1 mm à 2,5 mm.

13. Tête de forage selon l'une ou plusieurs des revendications 10, 11, 12, caractérisée en ce qu'au canal intérieur (2) se raccorde une chambre d'élargissement (3) qui relie toutes les ouvertures (5) au canal intérieur (2).

14. Tête de forage selon la revendication 10, caractérisée en ce que la tête de forage (1) va en s'élargissant en direction de la surface convexe (4).

15. Tête de forage selon l'une ou plusieurs des revendications 10 à 14, caractérisée en ce que les ouvertures (5) sont orientées perpendiculairement par rapport aux plans tangentiels chaque fois afférents, sur la surface convexe (4).

16. Tête de forage selon l'une ou plusieurs des revendications 10 à 15, caractérisée en ce que le produit d'injection (8) sort par les ouvertures (5) en prenant une forme en éventail, le flux de sortie allant en s'élargissant, ainsi constitué, faisant un angle situé dans la plage de 30° à 120°.
